# EUROPEAN PATENT APPLICATION

(11) **EP 2 025 273 A1**
(43) Date of publication of application: **18.02.2009**
(21) Application number: 08020003.3
(22) Date of filing: 26.07.2004
(51) Int. Cl.: A47K 3/40

(54) **Composite articles and method of manufacture**

(30) Priority: 25.07.2003 GB 0317438
(62) Divisional of application: 04743544.1
(71) Applicant: Kohler Mira Limited, Gloucestershire GL52 5EP (GB)
(72) Inventor: Lewis, Wiliam David, Cheltenham Gloucestershire GL52 8JJ (GB); Gostling, Paul Andrew, Brockworth Gloucester, GL3 4DS (GB); Battye, Ian Richard, Hollym East Yorkshire HU19 2QQ (GB); Magee, John, Hull, HU7 6DD (GB); Garrigan, Robert Stanley, Hull, HU8 9LX (GB)
(74) Representative: Wightman, David Alexander

(57) **Abstract**

A shower tray (1) has an inner core (8) of filler material within an outer shell consisting of an upper member (7) and a lower member (9) each formed from a sheet plastics material. A well of the shower tray (1) is provided with a waste hole (4) and the upper member (7) is configured to extend from a top side of the shower tray (1) to an underside of the shower tray (1) in the region of the waste hole (4).

## Description

This invention relates to composite articles and methods of manufacturing such articles. The invention has particular, but not exclusive application to composite articles of sanitary ware, especially shower trays.

Shower trays comprising an acrylic capped ABS (acrylonitrile butadiene styrene) upper layer adhered to and supported by a resin-stone base are known. Such trays are usually manufactured by pouring a resin-stone filler into a mould containing a shell of acrylic capped ABS pre-formed to the desired shape of the top and sides of the shower tray and hardening the filler to form the base. In this way the acrylic capped ABS shell forms the outer surface of the exposed parts of the tray in its installed position and the filler supports the shell and forms the underside of the tray that contacts the surface on which the tray is installed

Air/gasses can become trapped in the resin-stone filler during hardening to form the base resulting in a rough finish to the underside of the tray that can put off buyers as well as have a negative impact on the customer's impression of the quality of the tray. In some cases the base will have to be ground flat so the tray sits properly when installed. This is undesirable due to the potential health hazard from airborne particles released when grinding the base and precautions to reduce the risk add to manufacturing costs.

The rough surface of the base also makes it difficult to form a fluid tight seal between the tray and a waste pipe during installation. In some cases the installer may attempt to overcome this problem by silicon sealing the waste pipe to the tray. This prevents easy removal of the waste pipe which may be required if the waste pipes become misaligned. For example, waste pipes in new buildings may become misaligned due to settling of the building.

For installation on suspended timber floors, the waste pipe for the shower can be installed below the floor with the shower tray secured directly to the timber floor by a sand/cement mix or a silicone sealant. For installation on solid floors the shower tray has to be raised off the floor on legs to allow space beneath the shower tray for the waste pipe. Currently, manufacturers provide two shower trays, one for installation on suspended timber floors and another for installation on solid floors having inserts into which legs can be screwed for raised installation. The provision of different shower trays for installation on suspended or solid floors is undesirable for a variety of reasons. For example, additional components and processing stages are required to provide shower trays with inserts and retailers have to stock both types. This adds to costs for both manufacturers and retailers. Also customers/installers may purchase the wrong type of tray.

There are two main methods of providing inserts on the shower tray. One method is to glue MDF backboard having pre-assembled inserts to the base of the tray. Gluing of the backboard to the base is not a reliable or clean process increasing the complexity of manufacture and also undesirably increases the weight of the tray.

The second method is to place the inserts into the composite filler during moulding of the base. The problem with this method is that it is difficult to maintain the inserts vertical during curing of the base and release of the tray from the moulding tool, which can impact on the stability of the tray when installed.

A further problem of the known acrylic capped ABS shower trays is that the weight of the trays can make lifting and carrying the trays during installation difficult. Lifting and carrying heavy trays can result in injury to the lifter or/and cause the lifter to drop the tray resulting in damage to the tray. Typically, 800mm x 800mm trays currently available in the market place weigh in the region of 26kg to 33kg.

This problem can be increased by the presence of release agent used to assist removal of the shower tray from the mould during manufacture. The release agent is extremely difficult to remove making handling of the tray awkward and messy with increased risk of the tray slipping out of the lifter's hands. Also the release agent can attract swarf or debris which can present the additional risk of the lifter cutting their hands.

It is an object of the invention to overcome or at least mitigate some of the aforementioned disadvantages of known shower trays.

According to a first aspect of the invention there is provided a composite article having an upper member of plastics material and a lower member of plastics material that together form an outer shell, and an inner core of filler within the shell.

The invention will be described hereinafter with reference to shower trays for ablutionary shower units but it will be understood the invention is not limited to shower trays and has application to other articles of sanitary ware such as sinks or baths.

By this invention, the filler is contained within the plastics shell eliminating the need for a release agent and providing a smooth, flat surface on the underside aiding installation of the shower tray. Furthermore, the plastics shell may provide a more appealing finish to consumers.

The upper member may be made of materials that provide a hardwearing, scratch resistant outer surface to the tray with softer material underneath for absorbing impacts occurring during use of the tray. The upper member may be an acrylic capped ABS material. The acrylic material forms the hardwearing, scratch resistant outer surface of the tray with the softer underlying ABS material absorbing the impacts.

Preferably, the upper member is of uniform thickness. The ratio of the thickness of the ABS to the acrylic may be 9:1. In a preferred arrangement, the upper member is 2mm thick with a skin of acrylic 0.2mm thick and a sub-layer of ABS 1.8mm thick. The upper member may be coated in a primer to aid adhesion to the filler material of the inner core.

Preferably, the inner core is made of composite filler formed from curing a resin-stone mix, preferably of limestone, calcium carbonate, dicyclopentadiene (DCPD) resin and a catalyst. The inner core may be of varying thickness throughout its extent. The inner core may have regions of a minimum thickness, for example of 5mm, and regions of greater thickness than the minimum thickness. In this way, the inner core can be formed to provide adequate strength and rigidity for the shower tray but with less material thereby reducing the weight of the tray compared to existing shower trays.

Preferably, the lower member is made of ABS. The lower member may be of uniform thickness. The lower member may have a shape that conforms to the desired variations in thickness of the inner core. In this way, filler forming the inner core can be moulded to the required shape in situ between the upper member and lower member.

Preferably, sockets are provided in the underside of the tray for receiving legs for raising the shower tray above the surface on which it is installed. In this way, one tray can be provided with legs for optional use when installing the tray according to whether the tray is to be mounted directly on the floor or raised from the floor.

The legs may be an interference push-fit into the sockets. The sections of the legs located within the sockets may have longitudinally outwardly extending ribs that bite into the wall of the socket when the legs are inserted and assist in centering the legs.

According to a second aspect of the invention there is provided a method of manufacturing a composite article comprising providing a plastics upper member and a plastics lower member which together form an outer shell and providing an inner core of filler material between the upper and lower members such that the inner core is encased by the outer shell.

The method may comprise pre-forming the upper member and lower members and locating the upper member and lower member relative to each other to define a cavity corresponding substantially to the required shape of the inner core. The upper and lower members may be formed by vacuum moulding. The article may be a shower tray.

The upper and lower members may be provided with means to aid locating the members relative to one another to define the cavity. The locating means may comprise co-operating formations on the upper and lower members, preferably cup shaped regions on each member and/or peripheral edges of the members which are a close fit with each other when the upper and lower members are fitted together. The cup regions may be removed after forming the inner core, for example by cutting with a band saw, to provide a waste hole for the tray.

Preferably, the filler is compressed between the upper and lower members prior to hardening to displace the filler throughout the cavity defined between the upper and lower members. The upper and lower members may be held between two formers and pressure applied to the formers to displace the filler throughout the cavity.

The lower member may be provided with means to release air trapped between the members during moulding of the core. The air release means may be holes in the lower member that are large enough to allow air out but small enough to prevent the filler from seeping out. The holes may be formed by cutting off pips provided on the lower member. The holes may be 1mm in diameter.

The lower member may be provided with means to assist distribution of the filler material throughout the cavity. For example the lower member may be provided with an array of interlinked recessed regions that allow the filler material to flow freely within the cavity.

An embodiment of the invention will now be described, by example only, with reference to the following drawings, in which:-
**Figure 1** is a perspective view of a shower tray according to the invention from above;
**Figure 2** is a perspective view of the shower tray shown in **Figure 1** from below;
**Figure 3** is an exploded schematic of the different members of the shower tray;
**Figure 4** is a cross-section of a portion of the upper member of the tray;
**Figure 5** is a cut-away perspective view of an orifice for deceiving a riser leg;
**Figure 6** is a cut-away perspective view of the orifice with the riser leg received therein;
**Figure 7** is a schematic cross-sectional view of the tray during a stage of manufacture;
**Figure 8** is a schematic cross-sectional view of the tray during another stage of manufacture;
**Figure 9** is a schematic cross-sectional view of the tray during a further stage of manufacture;
**Figure 10** is a schematic cross-sectional view of the tray during yet another stage of manufacture;
**Figure 11** is a cross-section of a peripheral portion of the tray - prior to trimming around the perimeter;
**Figure 12** is a cross-section of a portion of the tray for receiving a waste pipe before the hole for the waste pipe has been formed; and
**Figure 13** is a perspective view of a carrier for the former nest brace for supporting the upper and lower members during manufacture of the shower tray.

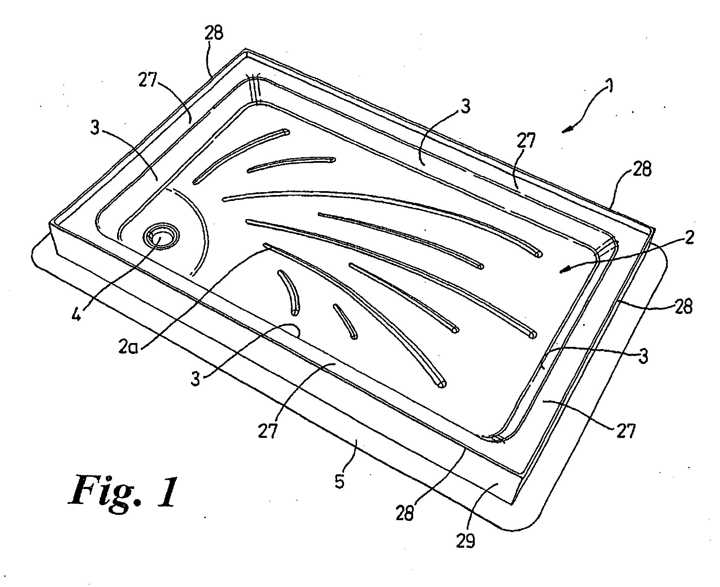

Referring to Figures 1 to 6 of the accompanying drawings, a shower tray 1 is shown comprising a floor 2 and inner walls 3 defining a well for collecting water dispensed from the shower head and confining the collected water to the shower tray. The floor 2 is provided with raised ribs 2a that provide an anti-slip surface. Any arrangement of ribs 2a and/or other pattern may be employed. A hole 4 is provided in a corner of the floor 2 for a waste pipe (not shown). The floor 2 has a 1° slope towards the waste hole 4 so that the water in the shower tray will self-drain towards the hole 4.

The inner walls 3 lead to an outwardly extending upper wall 27 at the top of the tray that leads to an upstand 28 at the outer peripheral edge of the tray. The upstand 28 assists in providing a watertight seal with panels of a shower enclosure and/or tiling when the shower tray 1 is installed. The upstand 28 leads to an outer side wall 29 that terminates in an outwardly directed skirt 5 at the bottom of the tray which is to be trimmed, as explained later herein, to produce the finished shower tray.

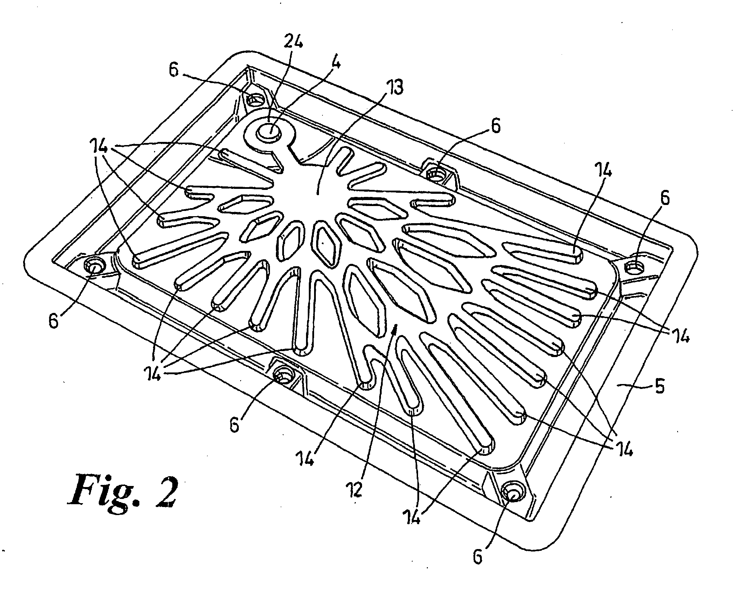

The shower tray is provided on the underside with sockets 6 (shown in Figures 2, 5 and 6) for receiving riser legs 23 for installing the tray raised off the floor. In this embodiment, six sockets are provided, one at each corner and one centrally along each longer side of the tray. It will be understood, however, that the number and arrangement of sockets may be altered according to the size and shape of the tray.

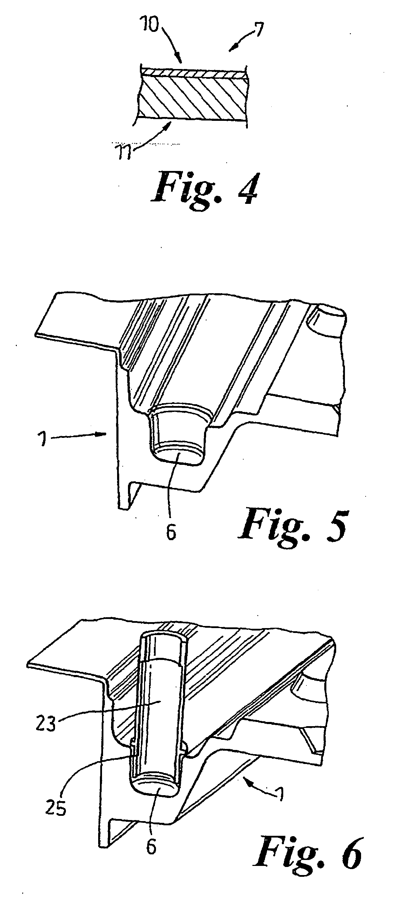

As clearly shown in Figure 6, each leg 23 has a flange 25 for limiting the extent of travel of the leg 23 into the socket 6. The circumferential section of leg 23 received within the socket 6 has longitudinally outwardly extending ribs that provide an interference fit during insertion of the leg 23 in the socket 6. These ribs assist in centralising the leg 23 so that it fits vertically in the socket 6 to ensure the tray is mounted horizontally during installation.

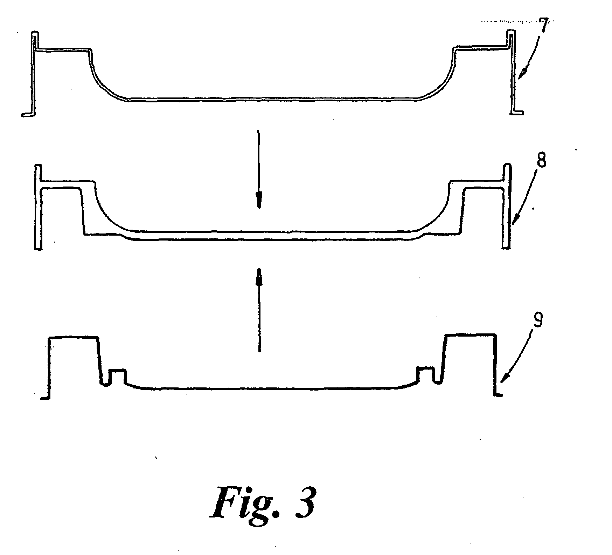

As can be clearly seen in Figure 3, the tray 1 comprises an inner core 8 sandwiched between an upper member 7 and a lower member 9 which form a shell encasing the inner core 8.

The upper member 7 is pre-formed to the required shape of the floor 2, inner side walls 3, upper wall 27, upstand 28, and outer side walls 29, for example by vacuum moulding, from an acrylic capped ABS sheet 2mm thick (a cross-section of which is shown in detail in Figure 4). The acrylic layer 10 forms the upper surface of the tray. The acrylic layer 10 is 0.2mm thick and the ABS layer 11 is 1.8mm thick. Forming the upper surface of acrylic provides a hard wearing surface that is resistant to scratching while the softer ABS layer 11 below the acrylic layer 10 absorbs impacts which occur during use.

The lower member 9 is also pre-formed, for example by vacuum moulding, from an ABS sheet 1.5mm thick to the required shape for co-operating with the upper member 7 as described later. The lower member 9 includes recessed regions forming patterned webbing 12 comprising a circular section 13, an annular region 24 around the waste hole 4 and a number of interlocking fingers 14 extending to corners of the tray.

The inner core 8 is made of polymer composite filler and provides strength and rigidity to the tray. In this embodiment, the polymer composite filler is formed from curing a resin-stone mix of limestone, calcium carbonate, DCPD resin and catalyst. It will be understood that other compositions may be employed.

The inner core 8 has regions of different thickness, with a minimum thickness of 5mm, defined by the spacing of the upper member 7 and lower member 9. In particular, the webbing 12 on the lower member 9 provides sections of the tray in which the inner core 8 is of a thickness greater than the minimum thickness of 5mm. These thicker sections provide extra rigidity and strength for the tray. In particular, the tray does not flex when stood on by a person and extra strength and rigidity is provided around the waste hole 4. The extra support provided by the extra thickness of the composite filler web ensures that the tray sits horizontally to the floor. Furthermore, the webbed design reduces the amount of composite filler required by approximately 1/6 thereby reducing the weight of the tray and resulting in a cost saving in material.

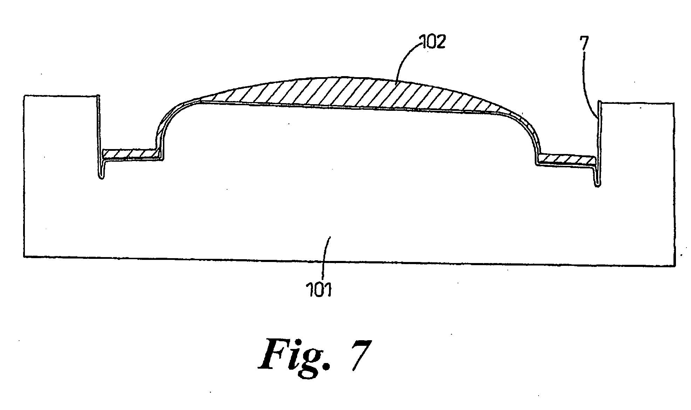

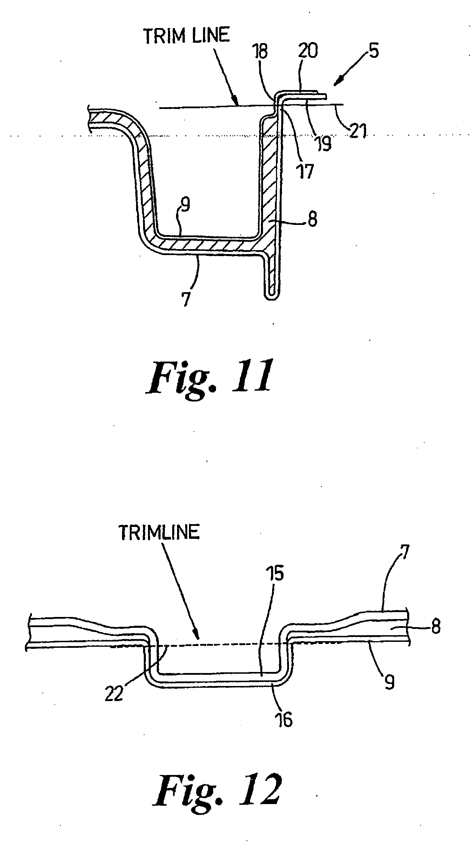

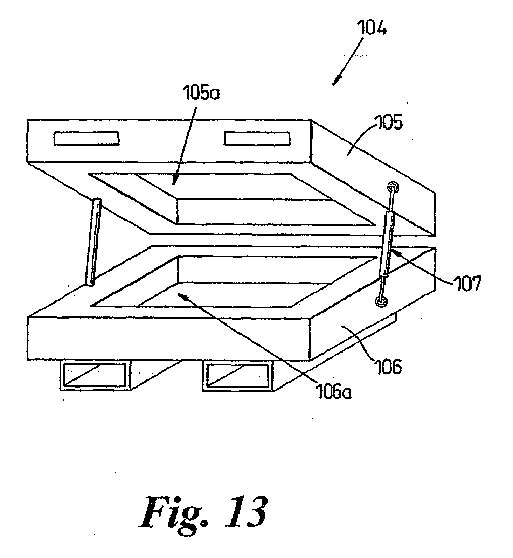

Manufacture of the shower tray will now be described with additional reference to Figures 7 to 13. Figures 7 to 10 show the different stages of manufacture of the tray, Figures 11 and 12 show trimming stages during finishing of the tray, and Figure 13 shows apparatus for use in the manufacture of the tray.

Firstly, the acrylic capped ABS upper member 7 and the ABS lower member 9 are pre-formed into the required shape by vacuum moulding.

The upper and lower members 7 and 9 are then coated in a primer resin and may be heated to cure the primer resin. The primer ensures good adhesion between the members 7 and 9 and the composite filler of the inner core 8.

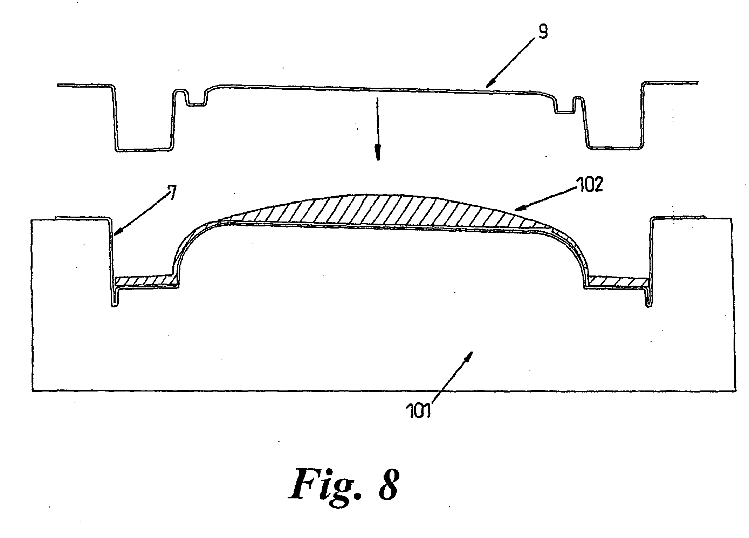

The upper member 7 is supported upside down in a lower former or nest 101 as shown in Figure 7 and a stone-resin mix 102 is then poured into the upper member 7 at a point near to where the waste hole 4 will be formed to coincide with the circular section 13 on the lower member 9. The lower member 9 is then fitted into the upper member 7 to sandwich the stone-resin mix 102 between the two members 7 and 9 as shown in Figure 8.

At this stage of manufacture, the region of the members 7 and 9 which are to form the waste hole 4 consist of cup shaped regions 15 and 16 respectively as shown in Figure 12. The cup shaped regions 15 and 16 are a close fit with each other to aid location of the lower member 9 relative to the upper member 7 when the lower member 9 is fitted into the upper member 7. The depth and fit of the cups 15 and 16 are such that it is impossible for any stone resin mix 102 to remain in the space between the cups 15 and 16 when the members 7and 9 are brought together. Correct fitting of the members 7 and 9 together is further aided by the close fit of peripheral edges 17 and 18 of the members 7 and 9 (see Figure 11). The close fit of the peripheral edges 17 and 18 prevents stone-resin mix 102 escaping from these regions.

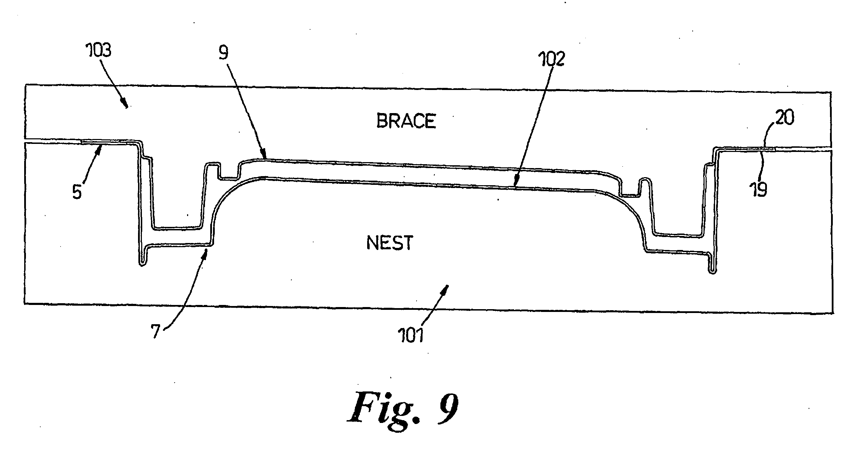

As shown in Figure 9, a top former or brace 103 is lowered onto the member 9 and pressure is applied to force the stone-resin mix 102 to flow to all accessible regions of the cavity between the members 7 and 9. The webbing 12 on the member 9 ensures that the stone-resin mix 102 flows quickly to all four corners of the tray. Flanges 19 and 20 around the peripheral edges of the members 7 and 9 are clamped between the nest 101 and brace 103 to form the skirt 5. The shape of the nest 101 and brace 103 is complementary to the shape of the upper member 7 and lower member 9 respectively. In this way, the members 7, 9 are supported to maintain the required shape and alignment of the members 7, 9.

A hinged carrier 104 for the nest 101 and brace 103 is shown schematically in Figure 13. The carrier 104 comprises upper and lower supports 105, 106 with opposed cavities 105a, 106a for receiving the brace 103 and nest 101 respectively. The members 105, 106 are mounted for relative pivotal movement to raise/lower the upper member 105 relative to the lower member 106 under the control of gas struts 107 to position the brace 103 and nest 101 relative to each other during the manufacturing process. The carrier 104 comprises three 40mm diameter pneumatic cylinders for generating around 80kg of down force on the member 9 to displace the stone-resin mix 102 throughout the cavity formed between the members 7, 9. Housing the nest 101 and brace 103 in the carrier 104 eliminates heavy manual lifting of the nest 101 and brace 103.

To allow air trapped between the members 7 and 9 to escape from the mould, small pips (not shown) are formed in the member 9 during vacuum moulding at regular intervals, approximately 20mm, along each finger as well as on the outer edge of the tray. The pips are cut off from the member 9 before fitting the member 9 into the member 7 in the nest 101. On closure of the brace 103, air is forced to the edges of the tray and out through holes created by cutting off the pips. The holes are large enough to let air escape but small enough to prevent the stone-resin mix 102 escaping. In this embodiment, the holes created by cutting off the pips are 1mm in diameter and the beads within the stone-resin mix 102 are approximately 2mm in diameter.

Pressure is applied to the member 9 for approximately 10 minutes after pouring and then the applied pressure is reduced allowing the brace 103 to back off 5mm. This ensures contraction of the tray during curing the stone-resin mix 102 does not damage the nest 101 and brace 103. In this position, the nest 101 and brace 103 still limit and control any distortion of the tray. It will be understood that the back off distance of 5mm can be altered to achieve the best results.

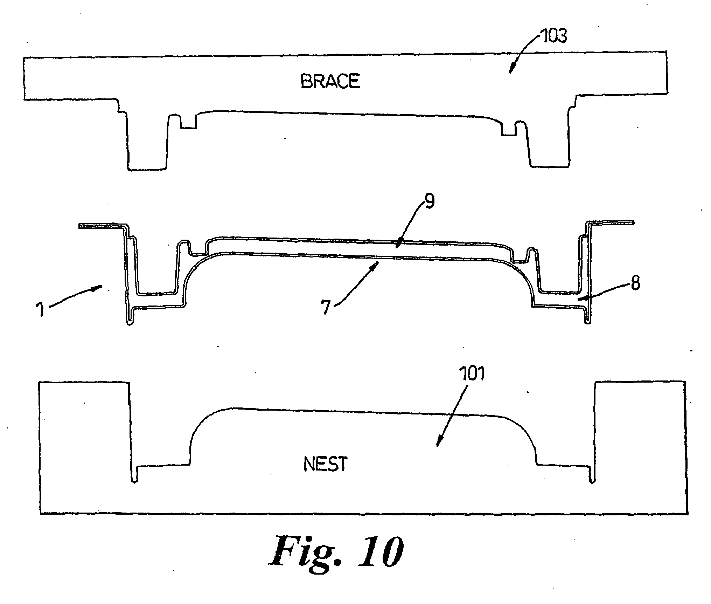

The brace 103 may then be lowered again to apply pressure to the tray for a final cure of the stone-resin mix 102 to form the inner core 8 of composite filler. After the final cure, the brace 103 is raised and the tray is removed from the nest 101 as shown in Figure 10.

The skirt 5 and cup regions 15 and 16 are then cut-off with a band saw or by other means at the positions indicated by dotted lines 21 and 22 in Figures 11 and 12 to provide a flat surface around the perimeter on the underside of the shower tray for mounting the tray and the waste hole 4 for connection to a waste pipe.

The process is a closed mould process and therefore styrene emissions are trapped within the tray. Accordingly, there is no requirement for means to extract the styrene emissions during manufacture, resulting in a reduction in costs.

Providing a member 9 of ABS to cover the filler 8 on the underside of the tray 1 allows the tray to be easily removed from the nest 101 and brace 103 eliminating the need for a release agent. Furthermore, there is no longer any need to grind the base of the tray flat. Accordingly, there is no need to remove airborne dust created by the grinding process.

As will now be appreciated the present invention provides a tray in which the composite filler of the inner core 8 is concealed from view by the upper and lower members 7, 9 providing a clean, smooth appearance that may appeal to the consumer. Furthermore, a smooth, flat finish can be achieved when moulding the ABS material that makes it easy to form a seal between the waste pipe and the tray. If the tray is dropped or knocked heavily against another object the ABS of members 7, 9 will absorb some of the impact and can reduce damage caused to the tray.

It will be understood that the invention is not limited to the embodiment described above and modifications and alterations within the scope of the invention described herein will be apparent to those skilled in the art.

For example, the upper member, lower member and inner core may be made of any suitable materials for the intended use of the composite article.

## Claims

1. A composite article comprising a shower tray (1) having a well provided with a waste hole (4), the shower tray (1) comprising an upper member (7) of plastics material on a topside of the shower tray (1) and a lower member (9) of plastics material on an underside of the shower tray (1), the upper and lower members (7,9) together forming an outer shell, and an inner core (8) of filler within the shell **characterised in that,** in the region of the waste hole (4), the upper member (7) extends from the topside to the underside of the shower tray (1).

2. A composite article according to claim 1 wherein the filler is a resin-stone mix, preferably a mixture of limestone, calcium carbonate, dicyclopentadiene (DCPD) resin and a catalyst.

3. A composite article according to claim 1 or claim 2 wherein the upper member (7) and lower member (9) are of uniform thickness.

4. A composite article according to any preceding claim wherein the lower member (9) has a shape that conforms to desired variations in thickness of the inner core (8).

5. A composite article according to any preceding claim wherein sockets (6) are provided in the underside of the lower member (9) for receiving legs (23) for raising the article above a surface on which it is installed.

6. A composite article according to any preceding claim wherein the waste hole (4) is formed by a cup region (15) of the upper member (7).

7. A composite article according to any preceding claim wherein the lower member (9) is configured to assist distribution of the filler material between the members (7,9) during moulding of the inner core (8) and/or to release air trapped between members (7,9) during moulding of the inner core (8).

8. A composite article according to any preceding claim wherein the shower tray (1) further comprises an outer wall (29) depending from the topside at an outer peripheral edge of the shower tray, and the inner core (8) extends between opposing surfaces of the upper member (7) and the lower member (9) in the region of the outer wall (29).

9. A method of manufacturing a composite article comprising a shower tray (1) having a well provided with a waste hole (4) as defined in claim 1, the method comprising the steps of providing an upper member (7) of plastics material and a lower member (9) of plastics material which together form an outer shell having the upper member (7) on the top side and the lower member (9) on the underside of the shower tray (1), and providing an inner core (8) of filler material within the shell **characterised by** the step of providing the waste hole (4) in a floor of the well so that the upper member (7) extends from the top side to the underside of the shower tray (1) in the region of the waste hole (4).

10. A method according to claim 9 further comprising the step of pre-forming the upper member (7) and lower member (9), for example by vacuum moulding plastics sheet material, and locating the upper member (7) and lower member (9) relative to each other to define a cavity corresponding substantially to the required shape of the inner core (8).

11. A method according to claim 9 or claim 10 further comprising the step of providing the upper member (7) with a cup region (15) configured to extend from the top side to the underside of the shower tray (1) in the region of the waste hole (4).

12. A method according to any of claims 9 to 11 comprising the step of inverting the upper member (7) so that an inner surface of the upper member (7) is uppermost, pouring filler material onto the inner surface of the inverted upper member (7), inverting the lower member (9) so that an inner surface of the lower member (9) is lowermost, bringing the members (7;9) together with the underside of the shower tray (1) uppermost to distribute and confine the filler material between the upper and lower members (7;9), and hardening the filler material to form the inner core (8).

13. A method according to claim 12 further including the step of compressing the filler between the upper and lower members (7;9) and/or assisting distribution of the filler material between the members (7,9) during formation of the inner core (8).

14. A method according to claim 11 or claim 12 further including the step of releasing air trapped between the members (7;9) during formation of the inner core (8).

15. A composite article having an upper member of plastics material and a lower member of plastics material that together form an outer shell, and an inner core of filler within the shell.
